(19) Europäisches Patentamt
European Patent Office
Office européen des brevets

(11) EP 0 797 361 B1

(12) # EUROPÄISCHE PATENTSCHRIFT

(45) Veröffentlichungstag und Bekanntmachung des Hinweises auf die Patenterteilung:
**17.11.2004 Patentblatt 2004/47**

(51) Int Cl.⁷: **H04N 9/28**

(21) Anmeldenummer: **97104230.4**

(22) Anmeldetag: **13.03.1997**

(54) **Verfahren zur Signalgewinnung in elektronischen Geräten mittels Interpolation zwischen Stützstellenwerten**

Method for recovering a signal in electronic devices using interpolation between support values

Méthode de recouvrement de signal pour appareils électroniques au moyen d'une interpolation entre des valeurs de référence

(84) Benannte Vertragsstaaten:
**DE FR GB**

(30) Priorität: **21.03.1996 DE 19611059**

(43) Veröffentlichungstag der Anmeldung:
**24.09.1997 Patentblatt 1997/39**

(73) Patentinhaber: **DEUTSCHE THOMSON-BRANDT GMBH**
**78048 Villingen-Schwenningen (DE)**

(72) Erfinder:
- **Gleim, Günter**
  **78052 Villingen-Schwenningen (DE)**
- **Rekla, Bernd**
  **78050 Villingen-Schwenningen (DE)**
- **Heizmann, Friedrich**
  **78052 Villingen-Schwenningen (DE)**

(74) Vertreter: **Hartnack, Wolfgang, Dipl.-Ing.**
**Deutsche Thomson-Brandt GmbH**
**European Patent Operations**
**Karl-Wiechert-Allee 74**
**30625 Hannover (DE)**

(56) Entgegenhaltungen:
**EP-A- 0 595 581** **US-A- 5 345 280**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Signalgewinnung in elektronischen Geräten mittels Interpolation zwischen Stützstellenwerten.

### Stand der Technik

Die Erfindung geht aus von einem Verfahren zur Signalgewinnung mittels Interpolation zwischen Stützstellenwerten nach der Gattung des unabhängigen Anspruchs 1. Es ist schon ein Verfahren zur Signalgewinnung mittels Interpolation zwischen Stützstellenwerten aus der US Patentschrift US 5 345 280 bekannt. Daraus ist es bekannt, bei einem Videoprojektionsgerät ein Gitternetz für den sichtbaren Bildschirmbereich vorzusehen und in einem Speicher Korrekturstützstellenwerte abzuspeichern. Die Korrekturstützstellenwerte sind jeweils nur für die Schnittpunkte der Gitterlinien exakt bestimmt. Im Betrieb des Videoprojektors werden dann die Korrekturstützstellenwerte synchron zur Bewegung der Elektronenstrahlen der drei Projektionsröhren ausgelesen. Durch eine Analog/Digital-Wandlung werden dann die zugehörigen Korrekturspannungen für die Projektionsröhren erzeugt. Zwischen zwei Korrekturstützstellenwerten müssen jedoch weitere Werte ermittelt werden. Eine Möglichkeit hierfür ist die lineare Interpolation zwischen zwei Korrekturstützstellenwerten. Diese Möglichkeit ist in der Fig. 3 der US Patentschrift dargestellt. Als Nachteil ergibt sich jedoch bei diesem Verfahren, daß die Interpolationsgeraden benachbarter Gitterfelder unterschiedliche Steigungen aufweisen und so jeweils bei Überschreiten des einen Gitterfeldes zum nächsten Sprünge in den Steigungen der Interpolationsgeraden auftreten.

Diese Sprünge wirken sich negativ auf die Bildqualität aus. Es sind dann nämlich unterschiedlich helle Bereiche im Bild erkennbar. Zur Lösung dieses Problems wird in der US 5 345 280 vorgeschlagen, die Interpolationskurven glatt durch die einzelnen Korrekturstützstellenwerte zu legen. Die Interpolationskurven werden dann so berechnet, daß sie 1. die Korrekturstützstellenwerte exakt treffen und 2. daß die angrenzenden Interpolationskurven bezogen auf einen Korrekturstützstellenwert so bestimmt werden, daß ihre ersten und zweiten Ableitungen an der Position des Korrekturstützstellenwertes übereinstimmen. Dadurch wird erreicht, daß keine Sprünge in den Steigungen zwischen den Interpolationskurven mehr auftreten und das keine unterschiedlich hellen Bereiche im Bild erkennbar sind. Der Nachteil an diesem Verfahren ist, daß ein hoher Rechenaufwand zur Bestimmung der Interpolationskurven erforderlich ist, der nur mit entsprechend teuren Rechenwerken bewältigt werden kann.

### Erfindung

Aufgabe der Erfindung ist es, ein Verfahren zur Signalgewinnung mittels Interpolation zwischen Stützstellenwerten anzugeben, das es ermöglicht die Interpolationskurve glatt durch die Stützstellenwerte zu legen und gleichzeitig mit einfacheren Rechenwerken für die Interpolationsrechnung auskommt.

Das erfindungsgemäße Verfahren mit den Merkmalen des Anspruchs 1 hat gegenüber dem aus dem Stand der Technik bekannten Verfahren den Vorteil, daß die Interpolationskurven angrenzender Interpolationsintervalle glatt ineinander überlaufen, wobei bei der Interpolation nur ein geringerer Rechenaufwand verursacht wird. Die benötigte Chip-Fläche in einem integrierten Schaltkreis zur Realisierung des Interpolationsalgoritmus, bleibt im Vergleich mit anderen Lösungen gering.

Besonders vorteilhaft ist, daß in jedem Interpolationsintervall durch lineare Interpolation zwischen den zugehörigen Korrekturstützstellenwerten ein Korrekturschrittwert ermittelt wird. Hierfür ist nur geringer Rechenaufwand erforderlich und die Korrekturschrittwerte können vorteilhaft in den nachfolgenden Rechnungen verwendet werden. Bei der Interpolation werden dann die Korrekturschrittwerte wenigstens des aktuellen Intervalls, des vorhergehenden und/oder des nachfolgenden Intervalls berücksichtigt.

Durch die in den abhängigen Ansprüchen aufgeführten Maßnahmen sind vorteilhafte Weiterbildungen und Verbesserungen des in Anspruch 1 angegebenen Verfahrens möglich. Es müssen nicht immer die gleichen Korrekturschrittwerte bei der Berechnung der Interpolationswerte für das ganze aktuelle Intervall herangezogen werden. Die Realisierung kann auch so gewählt sein, daß in einem bestimmten Teilbereich des aktuellen Intervalls nur der Korrekturschrittwert des vorhergehenden und/oder des nachfolgenden Intervalls berücksichtigt wird. Dadurch ist das Verfahren sehr flexibel.

Weiterhin ist es vorteilhaft, wenn die Korrekturschrittwerte dieser Interpolationsintervalle entsprechend der Position des aktuell zu berechnenden Interpolationswertes innerhalb des aktuellen Intervalls gewichtet werden. Dadurch wird erreicht, daß der Einfluß des vorhergehenden Intervalls mit wachsendem Abstand der Position des aktuell zu berechnenden Interpolationswertes von diesem Intervall schwächer wird und umgekehrt der Einfluß des nachfolgenden Intervalls mit geringer werdendem Abstand der Position des aktuell zu berechnenden Interpolationswertes zu dem nachfolgenden Intervall größer wird. Dieses Prinzip ist konkret in den Ansprüchen 3 bis 5 beansprucht.

Die Dekrementierung bzw. Inkrementierung der Gewichte entsprechend der Ansprüche 6 und 7 ist besonders vorteilhaft für eine Realisierung des Interpolationsverfahrens mit integrierten Schaltkreisen. Ebenfalls vorteilhaft ist, daß das Gewicht des Korrekturschrittwertes für das aktuelle Intervall konstant bleibt (siehe Anspruch 8).

In dem Fall, daß bei der Berechnung der Interpolationswerte für das aktuelle Interpolationsintervall immer auch die Korrekturschrittwerte des vorhergehenden Intervalls und des nachfolgenden Intervalls außer dem aktuellen Intervall berücksichtigt werden, ergibt sich das Problem, daß bei der Berechnung der Korrekturwerte in dem ersten Intervall keine Korrekturschrittwerte von einem vorhergehenden Intervall zur Verfügung stehen. Dieses Problem kann dadurch behoben werden, daß bei der Berechnung der ersten Interpolationswertes ein Korrekturwert als Startwert zum ersten Korrekturstützstellenwert hinzuaddiert wird.

Um die Interpolation insbesondere in den Randbereichen des Bereiches weiter zu verbessern, ist es vorteilhaft, bei der Berechnung der Interpolationswerte wenigstens im ersten Intervall zusätzliche gewichtete Korrekturschrittwerte des ersten Intervalls zu der allgemein gültigen Berechnungsvorschrift für die Berechnung der Korrekturwerte in den weiteren Intervallen hinzuzuaddieren.

Dabei ist es vorteilhaft, wenn die Gewichte der zusätzlichen Korrekturschrittwerte mit zunehmendem Abstand der Position des aktuell zu berechnenden Interpolationswertes von dem ersten zu berechnenden Interpolationswert abnehmen. Das führt dann zu einer Anhebung der Kurve für die Interpolationsschrittwerte in den Randbereichen und verhindert, daß beim Übergang vom ersten Intervall zum nächsten Intervall ein Knick in dieser Kurve entsteht.

Das gleiche Prinzip kann auch vorteilhaft zur Korrektur der genannten Kurve der Korrekturschrittwerte bei dem unterstem Intervall angewendet werden. Die vorteilhaften Maßnahmen hierfür sind in den Ansprüchen 13 bis 14 aufgeführt.

Die Maßnahme von Anspruch 15 verhindert ein "Abknicken" der Interpolationskurve im letzten Interpolationsschritt.

Eine andere Lösung für das Randproblem der Interpolation ist, daß jeweils am Rand des Bereichs wenigstens ein Stützstellenwert hinzugefügt wird. Diese zusätzlichen Korrekturstützstellenwerte können vorteilhaft aus den ersten bzw. letzten drei Korrekturstützstellenwerten des Bereichs berechnet werden. Beispiele für Berechnungsformeln für die Korrekturstützstellenwerte sind in den Ansprüchen 18 und 19 angegeben.

Die Realisierung des Interpolationsalgoritmus kann vorteilhafterweise so gewählt sein, daß die Berechnung der Interpolationswerte unabhängig von einem vorhergehend berechneten Interpolationswert vor sich geht.

Andererseits kann die Realisierung des Interpolationsalgoritmus auch so realisiert werden, daß der Interpolationswert jeweils rekursiv aus dem vorhergehend berechneten Interpolationswert bestimmt wird.

Das Verfahren kann sehr vorteilhaft zur Gewinnung der Korrekturspannungen bei der Konvergenzeinstellung von Videoprojektionsgeräten eingesetzt werden. Dabei wird über den Bildschirmbereich des Videoprojektors ein Gitternetz gelegt. Für die Kreuzungspunkte der Gitterlinien werden dann in einem Speicher Korrekturstützstellenwerte abgelegt. Zur Bestimmung der Korrekturspannungen für die Videozeilen zwischen den Kreuzungspunkten auf einer vertikalen Gitterlinie wird interpoliert nach dem hier vorgestellten Verfahren. Das hat den Vorteil, das gegenüber einem linearen Interpolationsverfahren keine Helligkeitsunterschiede bei den einzelnen Gitterfeldern mehr auftreten und trotzdem der Rechenaufwand in Grenzen gehalten wird.

<u>Zeichnung</u>

Fünf Ausführungsbeispiele der Erfindung sind in der Zeichnung dargestellt und werden in der nachfolgenden Beschreibung näher erläutert.

Es zeigen:

- **Fig. 1** den Bildschirmbereich eines Videoprojektionsgerätes und ein darüber gelegtes Gitternetz zur Einteilung;
- **Fig. 2** ein Blockschaltbild eines Videoprojektionsgerätes;
- **Fig. 3** das Prinzip, wie ein horizontales Konvergenzsignal nach der Erfindung erzeugt wird;
- **Fig. 4** eine genauere Darstellung eines Gitterfeldes in vertikaler Richtung mit eingezeichneten Videozeilen;
- **Fig. 5** die Berechnungsvorschriften für eine lineare Interpolation in vertikaler Richtung ;
- **Fig. 6** die sich auf Grund der linearen Interpolation ergebende Ausgangsspannung zur Konvergenzkorrektur;
- **Fig. 7** ein erstes Ausführungsbeispiel für ein verbessertes Interpolationsverfahren;
- **Fig. 8** ein zweites Ausführungsbeispiel für ein verbessertes Interpolationsverfahren;
- **Fig. 9** ein drittes Ausführungsbeispiel für ein verbessertes Interpolationsverfahren;
- **Fig. 10** eine Darstellung der Qualität des Interpolationsverfahrens gemäß Fig. 9 im Vergleich zu dem linearen Interpolationsverfahren;
- **Fig. 11** ein viertes Ausführungsbeispiel für ein verbessertes Interpolationsverfahren;
- **Fig. 12** eine Darstellung der Qualität des Interpolationsverfahrens gemäß Fig. 11 im Vergleich zu den linearen Interpolationsverfahren;
- **Fig. 13** ein fünftes Ausführungsbeispiel für ein verbessertes Interpolationsverfahren.

Beschreibung der Erfindung

In Fig. 1 bezeichnet die Bezugszahl 100 den sichtbaren Bildbereich eines Videoprojektionsgerätes. Mit der Bezugszahl 110 ist ein Gitternetz bezeichnet, das über den Bildbereich gelegt ist. Dieses Gitternetz wird nur zum Zweck der Konvergenzeinstellung für das Videoprojektionsgerät über den Bildschirmbereich gelegt. Es ist im normalen Betrieb des Projektionsgerätes nicht sichtbar. Die horizontalen Gitternetzlinien des Gitternetzes sind von 0 bis 12 durchnumeriert. Die vertikalen Gitterlinien des Gitternetzes sind von 0 bis 15 durchnumeriert. Zur Konvergenzkorrektur wird an den Kreuzungspunkten der Gitterlinien jeweils für jede Farbe rot, grün, blau, ein Korrekturstützstellenwert gespeichert. Dabei werden jeweils unterschiedliche Korrekturstützstellenwerte für die horizontale Konvergenzkorrektur und die vertikale Konvergenzkorrektur gespeichert. Es werden also pro Gitterlinienkreuzungspunkt sechs verschiedene Korrekturstützstellenwerte in einem Speicher des Videoprojektionsgerätes abgelegt. Das Prinzip der Konvergenzkorrektur ist dann so, daß die sechs digitalen Korrekturstützstellenwerte synchron mit der Bewegung der Elektronenstrahlen in den drei Projektionsröhren ausgelesen werden und nach Interpolation an je einen Digital/Analog-Wandler weitergegeben werden. An den Ausgängen der D/A-Wandler stehen dann die Konvergenzkorrekturspannungen an. Diese werden über Verstärker an Zusatzspulen, die parallel zu den normalen Ablenkspulen an den Projektionsröhren angeordnet sind angelegt. Das Prinzip der Konvergenzkorrektur für Videoprojektionsgeräte wird nachfolgend anhand des Blockschaltbildes in Fig. 2 näher erläutert.

Mit der Bezugszahl 200 ist die Antenne des Videoprojektionsgerätes bezeichnet. Das Antennensignal wird auf eine Abstimmeinheit 205 geleitet. In einem Demodulatorschaltkreis 210 werden die Tonsignale und das Videosignal voneinander getrennt. Die Tonsignale werden dem Tonteil 215 zugeführt. Der entsprechende Tonteil 215 gibt die erzeugten Signale auf den Lautsprecher 220 aus. Die Videosignale werden in einem separaten Videoteil 225 bearbeitet. Die Signale für die Horizonal- und Vertikalablenkung werden in einer separaten Signalverarbeitungseinheit 230 verarbeitet. Die erzeugten Videosignale werden über separate Verstärker 264, 269 und 274 zu den drei Projektionsröhren 260, 265 und 270 geführt. Entsprechend werden auch die Signale für die Horizontal- und Vertikalablenkung an die Ablenkeinheiten 263, 268 und 273 der Projektionsröhren weitergeleitet. Das abgestrahlte Licht der Projektionsröhren 260, 265 und 270 wird über einen Ablenkspiegel 275 auf einen Bildschirm 280 abgebildet. Zur Konvergenzkorrektur werden die Signale zur Horizontal- und Vertikalablenkung einer Recheneinheit 235 zugeführt. Die Recheneinheit 235 steht über einen entsprechenden Datenbus mit einem nicht flüchtigen Speicher 240 und einem flüchtigen Speicher 245 in Verbindung. Als nichtflüchtiger Speicher 240 kann z. B. ein EPROM-Baustein vorgesehen sein. Als flüchtiger Speicher kommt ein RAM-Baustein in Betracht. Die Recheneinheit 235 steht über den Datenbus ebenfalls mit einem Digital/Analog-Wandler-Array 250 in Verbindung. Dieses Array enthält 6 Digital/Analog-Wandler. Entsprechend stehen an den Ausgängen des D/A-Wandler-Arrays 250 6 Korrekturspannungen an. Die 6 Korrekturspannungen werden über eine Verstärkereinheit 255 zu den 6 Korrekturspulen 261, 262, 266, 267, 271, 272 der drei Projektionsröhren geleitet. Die Korrekturspulen 261, 266 und 271 dienen zur vertikalen Konvengenzkorrektur. Die Korrekturspulen 262, 267 und 272 dienen zur horizontalen Konvengenzkorrektur.

In dem nicht flüchtigen Speicher 240 sind die Korrekturstützstellenwerte abgespeichert, wie schon zuvor bei der Beschreibung der Fig. 1 erläutert. Synchron zum Verlauf der Horizontal- und Vertikalablenksignale liest die Recheneinheit 235 die geeigneten Korrekturstützstellenwerte aus und führt die nötige vertikale Interpolation mit den zugehörigen vertikalen und/oder horizontalen Korrekturstützstellenwerten durch. Dabei werden die Rechenergebnisse im flüchtigen Speicher 245 abgelegt. Die ermittelten Ergebnisse werden dann jeweils an den zugehörigen D/A-Wandler abgegeben. Natürlich müssen die Korrekturwerte zeitrichtig zur Verfügung stehen, so daß immer die richtigen Korrekturspannungen an den zugehörigen Korrekturspulen anstehen.

In Fig. 3 ist eine horizontale Gitterlinie dargestellt. 16 Korrekturstützstellenwerte sind für die Konvergenzkorrektur in horizontaler Richtung in dem Speicher 240 für diese Gitterlinie für jede Projektionsröhre abgespeichert. Zwischen den einzelnen Korrekturstützstellenwerten wird in horizontaler Richtung nicht interpoliert. Das Ausgangssignal am Digital/Analog-Wandler ist unterhalb der Gitterlinie 305 dargestellt und hat die Bezugsziffer 310. Es sieht dementsprechend treppenförmig aus. Dieses treppenförmige Ausgangssignal muß integriert werden, damit es in der Konvergenzkorrektur keine Sprünge gibt. Dies wird einfach mit RC-Filtern realisiert. Das integrierte Ausgangssignal ist unterhalb des Ausgangssignals des D/A-Wandlers dargestellt und hat die Bezugsziffer 315.

In vertikaler Richtung lassen sich die Korrektursignale nicht so einfach mittels RC-Filter integrieren. Die Signale müssen nicht gegen das Bezugssignal integriert werden, sondern die Integration muß zwischen den gespeicherten Werten auf den vertikalen Gitterlinien erfolgen. Es sind verschiedenste Verfahren für die Interpolation in vertikaler Richtung denkbar. Das einfachste Verfahren ist die lineare Interpolation zwischen den Gitterpunkten.

In Fig. 4 ist ein Gitterfeld, das durch zwei Kreuzungspunkte von Gitterlinien begrenzt ist, dargestellt. Für die Kreuzungspunkte sind die Korrekturstützstellenwerte W0 und W1 im Speicher abgespeichert. Zwischen den Kreuzungspunkten liegt noch eine Anzahl von Videozeilen. Die Videozeilen sind mit dem Laufindex m von 0 bis Z durchnumeriert. Eine häufige Einteilung des Gitternetzes ist so, daß 12 Gitterfelder vorgesehen sind und pro Gitterfeld 26 Videozeilen vorhanden sind. Bei der linearen Interpolation berechnet sich der Korrekturwert der m-ten Zeile innerhalb des Gitterfeldes nach Fig. 4 nach der Formel:

$$U_{corr}\Big|_m = W0 + \frac{m \times (W1 - W0)}{Z}$$

dabei ist W0 der Korrekturstützstellenwert bei dem oberen Gitterpunkt, W1 der Korrekturstützstellenwert bei dem unteren Gitterpunkt, m die Nummer der Zeile innerhalb des Gitterfeldes und Z die Anzahl der Zeilen pro Gitterfeld.

Der Algorithmus zur Berechnung der Korrekturwerte ist in der Fig. 5 näher dargestellt. Die Bezugszahlen 300 bis 304 bezeichnen die obersten 5 Gitterlinien des Gitternetzes. Mit W0 bis W4 sind die zugehörigen Korrekturstützstellenwerte bezeichnet.

Der Einfachheit halber sind hier bloß vier Videozeilen zwischen zwei Gitterlinien dargestellt worden. Jeweils neben den einzelnen Videozeilen ist angegeben, wie der zugehörige Korrekturwert berechnet wird. Der Korrekturwert für die erste Videozeile die auch der ersten Gitterlinie entspricht, wird gleich dem Korrekturstützstellenwert B0 gesetzt. Der Korrekturwert U2 für die zweite Videozeile errechnet sich aus dem Korrekturwert vorhergehenden Videozeile U1 vermehrt um einen Korrekturschrittwert a. Der Korrekturschrittwert a ergibt sich nach der folgenden Formel:

$$a = (W1 - W0) / Z.$$

Der Korrekturwert U3 für die dritte Videozeile errechnet sich dann rekursiv aus dem Korrekturwert U2 nach der Formel U3 = U2 + a. Entsprechend werden auch die Korrekturwerte für U4 und U5 für die nächsten Videozeilen berechnet. Der Korrekturwert der 6. Videozeile wird dann wieder gleich dem Korrekturstützstellenwert W1 gesetzt. Dann läuft die Berechnung weiter wie schon zuvor bei dem ersten Gitterfeld erläutert. Der Unterschied besteht nur darin, daß jetzt nicht der Korrekturschrittwert a jeweils hinzu addiert wird, sondern ein anderer Korrekturschrittwert b. Dieser geht aus linearer Interpolation zwischen den Korrekturstützstellenwerten der Gitterlinien 301 und 302 hervor. Die Berechnungsformel lautet:

$$b = (W2 - W1) / Z.$$

Entsprechend werden dann die Korrekturschrittwerte c und d usw. für die nächsten Gitterfelder berechnet. Die jeweilige Rechenvorschrift für die Berechnung der Korrekturwerte der einzelnen Videozeilen kann der Fig. 5 entnommen werden.

In Fig. 6 ist jetzt das Ergebnis der linearen Interpolation zwischen den Gitterlinien näher dargestellt. Mit der Bezugszahl 320 ist eine vertikale Gitterlinie bezeichnet. Mit der Bezugszahl 325 ist die Kurve für die Korrekturstützstellenwerte bezeichnet. Mit der Bezugszahl 330 ist die Interpolationskurve bezeichnet. Betrachtet man sich die Ausgangsspannungen in vertikaler Richtung, so erhält man zwischen den Gitterlinien jeweils Ausgangswerte die auf einer Geraden mit bestimmter Steigung liegen, aber von einem Gitterfeld zum nächsten Gitterfeld unterscheiden sich die Werte der Steigungen. Dies bedeutet, daß die von Zeile zu Zeile aufaddierte Konvergenzkorrektur sich von Feld zu Feld unterscheidet, was eine Abstandsmodulation der Zeilen von Feld zu Feld zur Folge hat. Diese Abstandsmodulation bewirkt eine Helligkeitsmodulation von Feld zu Feld. Auf dem Schirm eines Projektionsgerätes, das in vertikaler Richtung mit linearer Interpolation arbeitet, kann man bezüglich der Konvengenzeinstellung keinen Nachteil sehen, jedoch erzeugt die Helligkeitsmodulation sehr störende waagerechte Streifen im Bild.

Die harten Feldübergänge werden dadurch vermieden, daß man die durch lineare Interpolation errechneten Korrekturschrittwerte von einem Feld auch auf das vorhergehende und das nachfolgende Feld sich auswirken läßt. Dabei wird das Gewicht für den linear interpolierten Korrekturschrittwert innerhalb des Bezugsfeldes konstant gehalten und in dem vorhergehenden und dem nachfolgenden Feld wird das Gewicht ausgehend von dem konstanten Wert an der Feldgrenze zum Bezugsfeld bis auf den Wert "0" am gegenüberliegenden Feldende herabgesetzt. D.h., in allen Zeilen werden in diesem Ausführungsbeispiel die Daten aus drei Feldern ausgewertet. Das Gewicht der Daten in dem zugehörigen Bezugsfeld ist gleich der Summe der Gewichte der Daten aus dem vorhergehenden und dem nachfolgenden Feld. Dabei werden die Gewichte der Daten aus dem vorhergehenden Feld bei Annäherung der aktuellen Videozeile zum unteren aktuellen Feldrand dekrementierend verringert und die Gewichte der Daten in dem nachfolgenden Feld bei Annäherung der aktuellen Videozeile zum unteren Feldrand inkrementierend vergrößert. Die nach diesem Prinzip gewonnenen Daten weichen zwar in den Gitterpunkten von den dort abgespeicherten Korrekturstützstellenwerten ab, aber der Unterschied ist so gering, daß er sich nicht störend auf die Bildqualität auswirkt bzw. um den Unterschied zu den Idealwerten zu verringern bzw. zu eliminieren, können die abgespeicherten Korrekturstützstellenwerte absichtlich nicht als Idealwerte gewählt sein sondern über- oder unterkompensiert sein.

Auf das Problem an den oberen und unteren Bildrändern wird nachfolgend noch gesondert eingegangen werden.

Eine erste Realisierungsmöglichkeit dieses Prinzips ist in Fig. 7 dargestellt. Gleiche Bezugszahlen bezeichnen hier das Gleiche, wie schon zuvor in Fig. 5 erläutert. Zusätzlich zu den Gitterlinien 300 bis 304 sind noch die Gitterlinien 305, 306 und 307 am unteren Bildrand dargestellt. Außerdem sind noch zwei Gitterlinien 299 und 308 zusätzlich dargestellt. Diese dienen zur Lösung des schon zuvor erwähnten Randproblems und werden nachfolgend noch genauer beschrieben. Der Korrekturwert U1 für die erste Videozeile 300 entspricht nicht mehr einfach nur dem Korrekturstützstellenwert W0, sondern ergibt sich aus der folgenden Formel:

$$U1 = W0 - m + (P \times K + Q \times L + R \times L + V \times K) / (2 \times Z).$$

Welche Größen für die einzelnen Variablen K, L, P, Q, R, V einzusetzen sind, ist in Fig. 7 neben der Zeile 300 direkt angegeben. Die Größe Z entspricht in diesem Fall der Anzahl der Videozeilen pro Gitterfeld also dem Wert 5. Die Größe a entspricht wieder dem Korrekturschrittwert für das erste Feld, wie schon bei der Erklärung der Fig. 5 zuvor erläutert. Die Größe m entspricht dem Korrekturschrittwert für das nullte Feld und wird nach der folgenden Formel berechnet:

$$m = (W0 - im01) / Z.$$

Wie der Korrekturwert für die zweite Videozeile berechnet wird, ist neben der zweiten Videozeile angegeben. Die Berechnungformel hierfür lautet:

$$U2 = U1 + (P \times K + Q \times L + R \times L + V \times K) / (2 \times Z).$$

Alle anderen Korrekturwerte für die folgenden Zeilen berechnen sich nach einer dieser Berechnungsvorschrift entsprechenden Formel, wie auch neben der dritten Videozeile angegeben ist. Natürlich müssen die Korrekturschrittwerte von den drei beteiligten Feldern, nämlich aktuelles Gitterfeld, vorhergehendes Gitterfeld und nachfolgendes Gitterfeld jeweils ausgewählt werden.

Es ist zu berücksichtigen, daß der Korrekturschrittwert für das aktuelle Gitterfeld jeweils zweimal in der Berechnungsvorschrift auftritt, so daß sich in der Summe immer ein konstantes Gewicht für diesen Korrekturschrittwert ergibt. Als Beispiel wird die siebte Videozeile betrachtet. Der Term Q x L beträgt hier 1 x b und der Term K x V beträgt hier 4 x b, so daß sich in der Summe der Wert 5 x b ergibt. Dies ist bei den anderen Videozeilen dieses Gitterfeldes ganz entsprechend.

Die zusätzlichen Gitterlinien 299 und 308 dienen zur Behebung des Randwertproblems bei der Interpolation. Es werden für diese Gitterlinien einfach zusätzlich Korrekturstützstellenwerte im01 und im13 im Speicher abgelegt. Der Korrekturstützstellenwert im01 ergibt sich z.B. aus den Korrekturstützstellenwerten W0, W1 und W2 nach der folgenden Formel:

$$im01 = W0 - (W1 - W0) + ( (W2 - W1) - (W1 - W0) )$$

$$im01 = 3W0 - 3W1 + W2.$$

Der Korrekturstützstellenwert im13 wird z.B. dann nach der folgenden Formel berechnet:

$$im13 = W12 + (W12 - W11) - ( (W11 - W10) - (W12 - W11) )$$

$$im13 = 3W12 - 3W11 + W10.$$

Die Korrekturschrittwerte m, n ergeben sich genauso wie in den anderen Gitterfeldern angegeben. Die entsprechenden Formeln sind auch in der Fig. 7 jeweils angegeben. Darauf hinzuweisen ist noch, daß das Gewicht des Korrekturschrittwertes des vorhergehenden Gitterfeldes mit zunehmendem Abstand der aktuellen Videozeile von dem vorhergehenden Gitterfeld dekrementiert wird. Umgekehrt wird das Gewicht des Korrekturschrittwertes für das nachfolgende Feld mit geringer werdendem Abstand der aktuellen Videozeile zum nachfolgenden Feld inkrementiert. Als Beispiel werden die Veränderungen der Gewichte K und L beim zweiten Gitterfeld angeführt. Das zweite Gitterfeld wird durch die Gitterlinien 301 und 302 begrenzt.

In der Fig. 8 ist eine zweite Realisierungsform des erfindungsgemäßen Interpolationsverfahrens dargestellt. Die gleichen Bezugszeichen bezeichnen hier das Gleiche wie in der vorhergehenden Fig. von Fig. 7. Der Unterschied gegenüber der ersten Realisierungsform besteht darin, daß hier nunmehr drei Laufvariablen K, L, M für die Gewichte der drei Korrekturschrittwerte der drei beteiligten Felder nämlich das aktuelle Gitterfeld, das vorhergehende Gitterfeld und das nachfolgende Gitterfeld vorhanden sind. Dadurch fällt eine doppelte Variable für den Korrekturschrittwert des aktuellen Gitterfeldes weg. Die Rechenvorschrift zur Berechnung der Korrekturwerte jeder Videozeile sind dadurch auch leicht vereinfacht. Die beiden Terme Q x L und V x K sind in den neuen Ausführungsbeispielen zu dem Term V x M zusammengefaßt. Deutlich ist erkennbar, daß bei der Berechnung der aktuellen Videozeile innerhalb des aktuellen Gitterfeldes jeweils das Gewicht für den Korrekturschrittwert des aktuellen Gitterfeldes konstant bleibt.

Die Berechnung der zusätzlichen Korrekturstützstellenwerte im01 und im13 erfordert zusätzlichen Rechenaufwand. Insbesondere wenn diese Werte möglichst ideal berechnet werden sollen, kann der Rechenaufwand hierfür steigen. Um diesen zusätzlichen Aufwand zu vermeiden, kann die Realisierung etwas anders gewählt werden. Ein Beispiel einer anderen Realisierung ist in Fig. 9 dargestellt. Bei dieser Realisierung werden keine zusätzlichen Korrekturstützstellenwerte abgespeichert. Stattdessen wird bei der Berechnung der ersten Videozeile zu dem für diese Videozeile vorgesehenen Korrekturstützstellenwert W0 ein Startwert hinzu addiert. Dieser Startwert schließt die Dreier-Sequenz für das aktuelle Gitterfeld mit dem Korrekturschrittwert a ab. Der Startwert entspricht der Summe der aufaddierten gewichteten Korrekturschrittwerte a für den Fall, daß oberhalb des aktuellen Gitterfeldes noch ein weiteres Feld vorgesehen wäre. Der Startwert entspricht damit der folgenden Formel:

$$\text{Startwert} = \Sigma(Q \times L) = a \times ((Z - 1)^2 + (Z - 1)) / 2.$$

Nach Durchlaufen des zweiten Gitterfeldes ist der Einfluß dieses Startwertes wieder wettgemacht und die erhaltene Interpolationskurve läuft ideal weiter. Außer der ersten Videozeile werden alle nachfolgende Videozeilen nach einer, der folgenden Berechnungsvorschrift entsprechenden Berechnungsvorschrift berechnet:

$$U2 = U1 + (P \times K + Q \times L + V \times M) / (K + L + M).$$

Die zugehörigen Berechnungsvorschriften und Größen können wiederum der Fig. 9 entnommen werden.

In Fig. 10 ist jetzt die Differenz in den Korrekturwerten zweier benachbarter Videozeilen einmal bei dem linearen Interpolationsverfahren, Bezugszahl 335 und einmal bei dem Interpolationsverfahren gemäß Fig. 9, Bezugszahl 340 dargestellt. Auf der Abszisse ist die Videozeilennummer angegeben und auf der Ordinate ist der Korrekturwertunterschied von Zeile zu Zeile angegeben. Es ist deutlich erkennbar, daß bei der Kurve für das lineare Interpolationsverfahren Sprünge in den Korrekturwertunterschieden bei Übergang von einem Gitterfeld zum nächsten auftreten. Dagegen ist bei dem Interpolationsverfahren gemäß Fig. 9 kein Sprung vorhanden. Lediglich in den Randbereichen, d. h. bei Übergang vom ersten Gitterfeld zum zweiten Gitterfeld tritt ein Knick in der Kurve auf. Ebenfalls bei Übergang vom vorletzten Gitterfeld zum letzten Gitterfeld. Um auch diesen Effekt noch weitgehend zu verhindern, kann die Berechnungsvorschrift für die Korrekturwerte innerhalb des ersten und letzten Gitterfeldes noch extra variiert werden.

Hierfür ist in Fig. 11 eine weitere Realisierungsmöglichkeit dargestellt. Die Darstellung entspricht den vorhergehenden Darstellungen in den Fig. 9, 8 und 7. Der Knick in der Kurve von Fig. 10 kommt vorwiegend daher, daß bei der Realisierung gemäß Fig. 9 der Startwert nur bei der Berechnung des Korrekturwertes für die erste Videozeile hinzuaddiert worden ist. Um diesen starken Einfluß abzuschwächen, wird der Startwert in mehrere einzelne Summanden aufgeteilt und jeweils beginnend ab der Berechnung der Korrekturwerte für die zweite Videozeile schrittweise hinzuaddiert. Und zwar wird er mit dekrementierendem Gewicht hinzuaddiert, so daß der Einfluß mit zunehmendem Abstand der aktuellen Videozeile vom Rand abnimmt. Die dargestellte Kurve von Fig. 10 wird deshalb im ersten Gitterfeld angehoben und der Knick wird dadurch abgeschwächt. Das gleiche Prinzip wird auch bei der Berechnung der Korrekturwerte im letzten Gittefeld angewendet. Hier wird jedoch jeweils mit inkrementierendem Gewicht der Einfluß der Randkorrektur zum Rand hin vergrößert und bei der letzten Zeile ein Betrag hinzuaddiert, der dafür sorgt, daß die Steigung der Interpolationskurve nicht plötzlich einen Sprung erfährt. Die zugehörigen Berechnungsvorschriften können der Fig. 11 entnommen werden. In Fig. 12 ist das Ergebnis dieser Realisierung dargestellt. Die Fig. 12 entspricht dabei der Fig. 10. Deutlich ist bei der Kurve 345 erkennbar, daß in den Randbereichen der Knick deutlich abgeschwächt ist.

In Fig. 13 ist noch eine weitere Realisierungsmöglichkeit dargestellt. Dieses Rechenverfahren geht durch mathematische Umformung des Rechenverfahrens gemäß Fig. 11 hervor. Es ist so ausgelegt, daß jetzt die Berechnung der Korrekturwerte für jede Videozeile unabhängig von einer vorhergehenden Videozeile stattfindet. Die Berechnungsvorschrift für jede Videozeile ist bis auf das erste und letzte Feld gleich. Sämtliche mathematischen Ausdrücke und Größen sind in Fig. 13 selbst erklärlich dargestellt und brauchen hier nicht näher erläutert werden.

Die dargestellten Verfahren sind vielfältig abwandelbar.

Bei dem dargestellten Verfahren wurde ein Ausführungsbeispiel mit folgenden Parametern gewählt:

1. Der Gitterabstand beträgt 5 Zeilen
2. es wurden 12 horizontale Gitterzeilen gewählt
3. die benachbarten Felder wurden im gesamten Bereich beeinflußt
4. es wurden die Daten von einem vorhergehenden Feld und einem nachfolgenden Feld für ein aktuelles Feld herangezogen.
5. das Inkrementieren und das Dekrementieren der Daten aus den benachbarten Feldern wurde linear durchgeführt.

Alle 5 Variablen können unabhängig voneinander verändert werden. Die Formeln müssen dann entsprechend angepaßt werden.

Insbesondere ist es z.B. möglich, daß der Korrekturschrittwert des vorhergehenden Feldes nur bei der Berechnung der Interpolationswerte in einem oberen Teil des aktuellen Gitterfeldes Berücksichtigung findet, während der Korrekturschrittwert des nachfolgenden Gitterfeldes nur bei der Berechnung der Interpolationswerte in einem unteren Teil des aktuellen Gitterfeldes Berücksichtigung findet. Natürlich kommt auch eine andere Einteilung als in oberen und unteren Teil des aktuellen Gitterfeldes in Betracht.

Es ist beispielsweise auch noch im Bereich der Erfindung anzusehen, wenn nicht nur die Daten von drei beteiligten Gitterfeldern für die Interpolation berücksichtigt werden, sondern ggf. auch mehr. Das Verfahren kann überall da sinnvoll eingesetzt werden, wo zwischen Stützstellenwerten interpoliert werden muß. Natürlich müssen die Stützstellenwerte nicht unbedingt fest abgespeichert sein, sondern Sie können auch übertragen worden sein. Insbesondere wird als Anwendungsfall deshalb auch an die Fehlerkorrektur bei übertragenen Audiodaten gedacht.

## Patentansprüche

**1.** Verfahren zur Signalgewinnung in elektronischen Geräten mittels Interpolation zwischen Stützstellenwerten (W0, W1, bis W12), wobei die Stützstellenwerte (W0 bis W12) linear über einen Bereich verteilt sind, und jeweils in bestimmten Abständen eine Anzahl von Interpolationswerten berechnet werden, wobei die Anzahl größer oder gleich 1 ist, **dadurch gekennzeichnet, daß** zur Berechnung eines Korrekturschrittwertes (a bis l) jeweils für ein Intervall begrenzt durch zwei Stützstellenwerte (W0 bis W12) linear zwischen den Stützstellenwerten (W0 bis W12) interpoliert wird und daß zur Berechnung der Interpolationswerte in dem aktuellen Intervall außer dem Korrekturschrittwert (a bis l) für das aktuelle Intervall auch wenigstens der Korrekturschrittwert (a bis l) des vorhergehenden und/oder des nachfolgenden Intervalls herangezogen wird.

**2.** Verfahren nach Anspruch 1, **wobei** der Korrekturschrittwert (a bis l) des vorhergehenden und/oder des nachfolgenden Intervalls nur in einem oder mehreren Teilbereichen des aktuellen Intervalls zur Berechnung der Interpolationswerte herangezogen wird.

**3.** Verfahren nach Anspruch 1 oder 2, **wobei** die Korrekturschrittwerte (a bis l) des vorhergehenden und des nachfolgenden Intervalls entsprechend der Position des aktuell zu berechnenden Interpolationswertes innerhalb des aktuellen Intervalls gewichtet werden.

**4.** Verfahren nach Anspruch 3, **wobei** das Gewicht (K, L, M) des Korrekturschrittwertes (a bis l) für das vorhergehende Intervall mit zunehmendem Abstand der aktuellen Position des zu berechnenden Interpolationswertes innerhalb des aktuellen Intervalls vom vorhergehenden Intervall abnimmt.

**5.** Verfahren nach Anspruch 3 oder 4, **wobei** das Gewicht (K, L, M) des Korrekturschrittwertes (a bis l) für das nachfolgende Intervall mit abnehmendem Abstand der Position des aktuell zu berechnenden Interpolationswert innerhalb des aktuellen Intervalls vom nachfolgenden Intervall zunimmt.

**6.** Verfahren nach einem der Ansprüche 2 bis 5, **wobei** das Gewicht (K, L, M) des Korrekturschrittwertes (a bis l) für das vorhergehende Intervall bei einem Übergang von einer Position eines zu berechnenden Interpolationswertes zur nächsten dekrementierend verringert wird.

**7.** Verfahren nach einem der Ansprüche 2 bis 6, **wobei** das Gewicht (K, L, M) des Korrekturschrittwertes (a bis l) für das nachfolgende Intervall bei jedem Wechsel von einer Position eines aktuell zu berechnenden Interpolationswertes zur nächsten inkrementierend vergrößert wird.

**8.** Verfahren nach einem der Ansprüche 2 bis 7, **wobei** das Gewicht des Korrekturschrittwertes (a bis l) für das aktuelle Intervall bei der Berechnung der Interpolationswerte innerhalb des aktuellen Intervalls konstant bleibt.

**9.** Verfahren nach einem der vorhergehenden Ansprüche, **wobei** zur Berechnung der Interpolationswerte im ersten Intervall des Bereichs ein Startwert mindestens zu dem ersten Stützstellenwert des ersten Intervalls hinzu addiert wird.

**10.** Verfahren nach Anspruch 9, **wobei** der Startwert aus der Summe der Beiträge der gewichteten Korrekturschrittwerte (a) des ersten Intervalls bei einer fiktiven Berechnung von Interpolationswerten für ein vor dem ersten Intervall liegendes Intervall besteht.

**11.** Verfahren nach einem der vorhergehenden Ansprüche 1 bis 8, **wobei** zur Berechnung von Interpolationswerten im ersten Intervall des Bereichs zusätzliche gewichtete Korrekturschrittwerte (a bis l) des ersten Intervalls, die von einer fiktiven Berechnung von Interpolationswerten für ein vor dem ersten Intervall liegendes Intervall herrühren, hinzu addiert werden.

**12.** Verfahren nach Anspruch 11, **wobei** die Gewichte (K, L, M) der zusätzlichen Korrekturschrittwerte (a bis l) des ersten Intervalls mit zunehmendem Abstand der Position des aktuell zu berechnenden Interpolationswertes innerhalb des ersten Intervalls von der Bereichsgrenze abnehmen.

**13.** Verfahren nach einem der Anspruche 1 bis 9, **wobei** zur Berechnung von Interpolationswerten im letzten Intervall des Bereichs zusätzliche gewichtete Korrekturschrittwerte (a bis l), die von einer fiktiven Berechnung von Interpolationswerten für ein nach dem letzten Intervall liegendes Intervall herrühren, hinzu addiert werden.

**14.** Verfahren nach Anspruch 13, **wobei** die Gewichte (K, L, M) der zusätzlichen Korrekturschrittwerte (a bis l) des letzten Intervalls mit abnehmendem Abstand der Position des aktuell zu berechnenden Interpolationswertes innerhalb des letzten Intervalls von der Bereichsgrenze zunehmen.

**15.** Verfahren nach Anspruch 13 oder 14, **wobei** bei der Berechnung des letzten Interpolationswertes von dem letzten Intervall zusätzlich ein Betrag hinzu addiert wird, um die Steigung der Interpolationskurve konstant zu halten.

**16.** Verfahren nach einem der Ansprüche 1 bis 15, **wobei** der Bereich durch Hinzufügen wenigstens eines Stützstellenwertes (im01, im13) an jeder Bereichsgrenze erweitert wird.

**17.** Verfahren nach Anspruch 16, **wobei** die zusätzlichen Stützstellenwerte (im01, im13) jeweils durch Interpolation ausgehend von den drei nächst benachbarten Stützstellenwerten (W0, W1, W2; W10, W11, W12) bestimmt werden.

**18.** Verfahren nach Anspruch 17, **wobei** der erste zusätzliche Stützstellenwert im01 nach der Formel:

$$im01 = 3W0 - 3W1 + W2$$

berechnet wird, wobei W0, W1, W2 die drei nächstbenachbarten Stützstellenwerte sind.

**19.** Verfahren nach Anspruch 17 oder 18, **wobei** der zweite zusätzliche Stützstellenwert im13 nach der Formel:

$$im13 = 3W12 - 3W11 + W10$$

berechnet wird, wobei W10, W11, W12 die drei nächstbenachbarten Stützstellenwerte sind.

**20.** Verfahren nach einem der vorhergehenden Ansprüche 1 bis 19, **wobei** die Interpolationswerte jeweils mit einer Berechnungsvorschrift berechnet werden, die unabhängig von dem Ergebnis einer vorhergehenden Berechnung eines Interpolationswertes ist.

**21.** Verfahren nach einem der vorhergehenden Ansprüche 1 bis 19, **wobei** die Interpolationswerte jeweils mit einer rekursiven Berechnungsvorschrift berechnet werden, wobei jeweils das Ergebnis der vorhergehenden Berechnung eines Interpolationswertes verwendet wird.

**22.** Verwendung des Verfahrens nach einem der vorhergehenden Ansprüche 1 bis 21 bei der Generierung von Korrekturspannungen zur Konvergenzeinstellung bei einem Videoprojektionsgerät.

**Claims**

**1.** Method for obtaining signals in electronic devices by means of interpolation between interpolation point values (W0, W1 to W12), the interpolation point values (W0 to W12) being distributed linearly over a region, and a number of interpolation values being calculated in each case at specific intervals, the number being greater than or equal to 1, **characterized in that** in order to calculate a correction step value (a to l) interpolation is carried out linearly between the interpolation point values (W0 to W12), in each case for an interval bound by two interpolation point values (W0 to W12), and **in that** apart from the correction step value (a to l) for the current interval, in order to calculate the interpolation values in the current interval use is also made of at least the correction step value (a to l) of the preceding and/or following interval.

**2.** Method according to claim 1, **wherein** the correction step value (a to l) of the preceding and/or of the following interval is used only in one or more subregions of the current interval in order to calculate the interpolation values.

**3.** Method according to claim 1 or 2, **wherein** the correction step values (a to l) of the preceding and of the following interval are weighted in accordance with the position of the interpolation value currently to be calculated within the current interval.

**4.** Method according to claim 3, **wherein** the weight (K, L, M) of the correction step value (a to l) for the preceding interval decreases with increasing distance of the current position of the interpolation value to be calculated within the current interval from the preceding interval.

**5.** Method according to claim 3 or 4, **wherein** the weight (K, L, M) of the correction step value (a to l) for the following interval increases with decreasing distance of the position of the interpolation value currently to be calculated within the current interval from the following interval.

**6.** Method according to one of claims 2 to 5, **wherein** the weight (K, L, M) of the correction step value (a to l) for the preceding interval is reduced decrementally in the case of a transition from one position of an interpolation value to be calculated to the next.

**7.** Method according to one of claims 2 to 6, **wherein** the weight (K, L, M) of the correction step value (a to l) for the following interval is increased incrementally in the case of any change from one position of an interpolation value currently to be calculated to the next.

**8.** Method according to one of claims 2 to 7, **wherein** the weight of the correction step value (a to l) for the current interval remains constant in the case of calculating the interpolation values within the current interval.

**9.** Method according to one of the preceding claims, **wherein**, in order to calculate the interpolation values in the first interval of the region, a starting value is added at least to the first interpolation point value of the first interval.

**10.** Method according to claim 9, **wherein** the starting value comprises the sum of the contributions of the weighted correction step values (a) of the first interval in the case of a fictional calculation of interpolation values for an interval situated before the first interval.

**11.** Method according to one of the preceding claims 1 to 8, **wherein,** in order to calculate interpolation values in the first interval of the region, additional weighted correction step values (a to l) of the first interval, which originate from a fictional calculation of interpolation values for an interval situated before the first interval, are added thereto.

**12.** Method according to claim 11, **wherein** the weights (K, L, M) of the additional correction step values (a to l) of the first interval decrease with increasing distance of the position of the interpolation value currently to be calculated within the first interval from the boundary of the region.

**13.** Method according to one of claims 1 to 9, **wherein** in order to calculate interpolation values in the last interval of the region, additional weighted correction step values (a to l), which originate from a fictional calculation of interpolation values for an interval situated after the last interval, are added thereto.

**14.** Method according to claims 13, **wherein** the weights (K, L, M) of the additional correction step values (a to l) of the last interval increase with decreasing distance of the position of the interpolation values currently to be calculated within the last interval from the boundary of the region.

**15.** Method according to claim 13 or 14, **wherein** in calculating the last interpolation values of the last interval, an amount is additionally added thereto in order to keep the gradient of the interpolation curve constant.

**16.** Method according to one of claims 1 to 15, **wherein** the region is expanded by adding at least one interpolation point value (im01, im13) at each boundary of the region.

**17.** Method according to claim 16, **wherein** the additional interpolation point values (im01, im13) are determined in each case by interpolation starting from the three most closely neighbouring interpolation point values (W0, 21, W2; W10, W11, W12).

**18.** Method according to claim 17, **wherein** the first additional interpolation point value im01 is calculated according to the formula:

$$im01 = 3W0 - 3W1 + W2$$

W0, W1, W2 being the three most closely neighbouring interpolation point values.

**19.** Method according to claim 17 or 18, **wherein** the second additional interpolation point value im13 is calculated according to the formula:

$$im13 = 3W12 - 3W11 + W10$$

W10, W11, W12 being the three most closely neighbouring interpolation point values.

**20.** Method according to one of the preceding claims 1 to 19, **wherein** the interpolation values are calculated in each case using a computing rule which is independent of the result of a preceding calculation of an interpolation value.

**21.** Method according to one of the preceding claims 1 to 19, **wherein** the interpolation values are calculated in each case using a recursive computing rule, use being made in each case of the result of the preceding calculation of an interpolation value.

**22.** Use of the method according to one of the preceding claims 1 to 21, in generating correction voltages for convergence adjustment in a video projector.

## Revendications

**1.** Méthode de recouvrement de signal pour appareils électroniques au moyen d'une interpolation entre des valeurs de référence
(Wo, W1, jusqu'à W12), où les valeurs de référence (WO à W12) sont réparties linéairement sur une zone, et un certain nombre de valeurs d'interpolation est calculé à des intervalles définis, le nombre étant supérieur ou égal à 1, **caractérisée en ce que,** pour le calcul d'une valeur incrémentielle de correction ( a à 1), pour chaque intervalle limité par deux valeurs de référence (W0 à W12) une interpolation linéaire entre les valeurs de référence (W0 à W12) est réalisée et pour le calcul des valeurs d'interpolation dans l'intervalle actuel, en dehors de la valeur incrémentielle de correction (a à 1) pour l'intervalle actuel, au moins également la valeur incrémentielle de correction (a à 1) de l'intervalle précédent et/ou suivant est extraite.

2. Méthode selon la revendication 1, **où** la valeur incrémentielle de correction (a à 1) de l'intervalle précédent et/ou suivant est extraite uniquement dans une ou plusieurs zones partielles de l'intervalle actuel en vue du calcul des valeurs d'interpolation.

3. Méthode selon la revendication 1 ou 2, **où** les valeurs incrémentielles de correction (a à 1) de l'intervalle précédent et de l'intervalle suivant sont pondérées en fonction de la position de la valeur d'interpolation à calculer actuellement à l'intérieur de l'intervalle actuel.

4. Méthode selon la revendication 3, **où** le poids (K, L, M) de la valeur incrémentielle de correction (a à 1) pour l'intervalle précédent diminue à mesure qu'augmente l'écart de la position actuelle de la valeur d'interpolation à calculer à l'intérieur de l'intervalle actuel, par rapport à l'intervalle précédent.

5. Méthode selon les revendications 3 ou 4, **où** le poids (K, L, M) de la valeur incrémentielle de correction (a à 1) pour l'intervalle suivant augmente à mesure que diminue l'écart de la position de la valeur d'interpolation à calculer actuellement à l'intérieur de l'intervalle actuel, par rapport à l'intervalle suivant.

6. Méthode selon une des revendications 2 à 5, **où** le poids (K, L, M) de la valeur incrémentielle de correction (a à 1) pour l'intervalle précédent est réduit de manière décrémentielle lors d'un passage d'une position d'une valeur d'interpolation devant être calculée à la position suivante.

7. Méthode selon une des revendications 2 à 6, **où** le poids (K, L, M) de la valeur incrémentielle de correction (a à 1) pour l'intervalle suivant est augmenté de manière incrémentielle lors de chaque changement d'une position d'une valeur d'interpolation à calculer actuellement à la position suivante.

8. Méthode selon une des revendications 2 à 7, **où** le poids (K, L, M) de la valeur incrémentielle de correction (a à 1) pour l'intervalle actuel reste constant lors du calcul des valeurs d'interpolation à l'intérieur de l'intervalle actuel.

9. Méthode selon une des revendications précédentes, **où** pour le calcul des valeurs d'interpolation dans le premier intervalle de la zone une valeur de départ est ajoutée au moins à la première valeur de référence du premier intervalle.

10. Méthode selon la revendication 9, **où** la valeur de départ se compose de la somme des montants des valeurs incrémentielles de correction pondérées (a) du premier intervalle lors d'un calcul fictif de valeurs d'interpolation d'un intervalle situé avant le premier intervalle.

11. Méthode selon une des revendications 1 à 8, **où**, pour le calcul de valeurs d'interpolation dans le premier intervalle de la zone, des valeurs incrémentielles de correction pondérées supplémentaires (a à 1) du premier intervalle, provenant d'un calcul fictif de valeurs d'interpolation pou un intervalle situé avant le premier intervalle, doivent être ajoutées.

12. Méthode selon la revendication 11, **où** les poids (K, L, M) des valeurs incrémentielles de correction supplémentaires (a à 1) du premier intervalle diminuent à mesure qu'augmente l'écart de la position de la valeur d'interpolation à calculer actuellement à l'intérieur du premier intervalle par rapport à la limite de zone.

13. Méthode selon une des revendications 1 à 9, **où**, pour le calcul des valeurs d'interpolation dans le dernier intervalle de la zone, des valeurs d'incrémentation de correction pondérées (a à 1) supplémentaires, provenant d'un calcul fictif de valeurs d'interpolation pour un intervalle situé après le dernier intervalle, sont ajoutées.

14. Méthode selon la revendication 13, **où** les poids (K, L, M) des valeurs incrémentielles de correction supplémentaires (a à 1) du dernier intervalle augmentent à mesure que diminue l'écart de la position de la valeur d'interpolation à calculer actuellement à l'intérieur du dernier intervalle, par rapport à la limite de zone.

15. Méthode selon la revendication 13 ou 14, **où**, lors du calcul de la dernière valeur d'interpolation du dernier intervalle, un montant est ajouté afin de maintenir constante la pente de la courbe d'interpolation.

**16.** Méthode selon l'une des revendications 1 à 15, **où** la zone est étendue par l'ajout d'au moins une valeur de référence (im01, im13) à chaque limite de la zone.

**17.** Méthode selon la revendication 16, **où** les valeurs de référence supplémentaires (im01, im13) sont définies à chaque fois par interpolation sur la base des trois valeurs de référence voisines (W0, W1, W2, W10, W11, W12).

**18.** Méthode selon la revendication 17, **où** la première valeur de référence supplémentaire im01 est calculée d'après la formule suivante :

$$im01 = 3W0 - 3W1 + W2$$

où W0, W1 et W2 sont les trois valeurs de références voisines

**19.** Méthode selon la revendication 17 ou 18, **où** la deuxième valeur de référence supplémentaire im13 est calculée d'après la formule suivante :

$$im13 = 3W12 - 3W11 + W10$$

où W10, W11 et W12 sont les trois valeurs de références voisines.

**20.** Méthode selon une des revendications précédentes 1 à 19, **où** les valeurs d'interpolation sont à chaque fois calculées selon une procédure de calcul qui n'est pas fonction du résultat d'un calcul précédent d'une valeur d'interpolation.

**21.** Méthode selon une des revendications précédentes 1 à 19, **où** les valeurs d'interpolation sont à chaque fois calculées avec une procédure de calcul récursive, où le résultat du calcul précédent d'une valeur d'interpolation est utilisé.

**22.** Utilisation de la méthode selon une des revendications précédentes 1 à 21 lors de la génération de tensions de correction en vue du réglage de la convergence dans un appareil de vidéoprojection

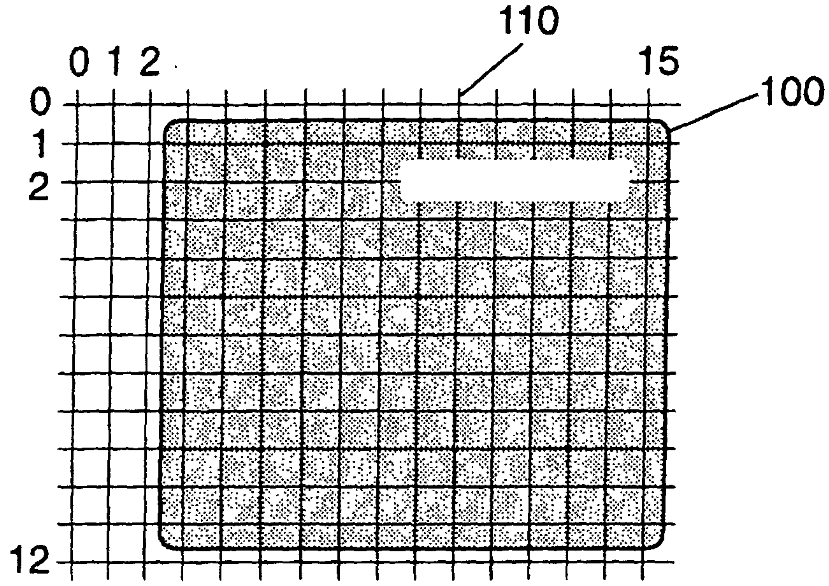


Fig.1

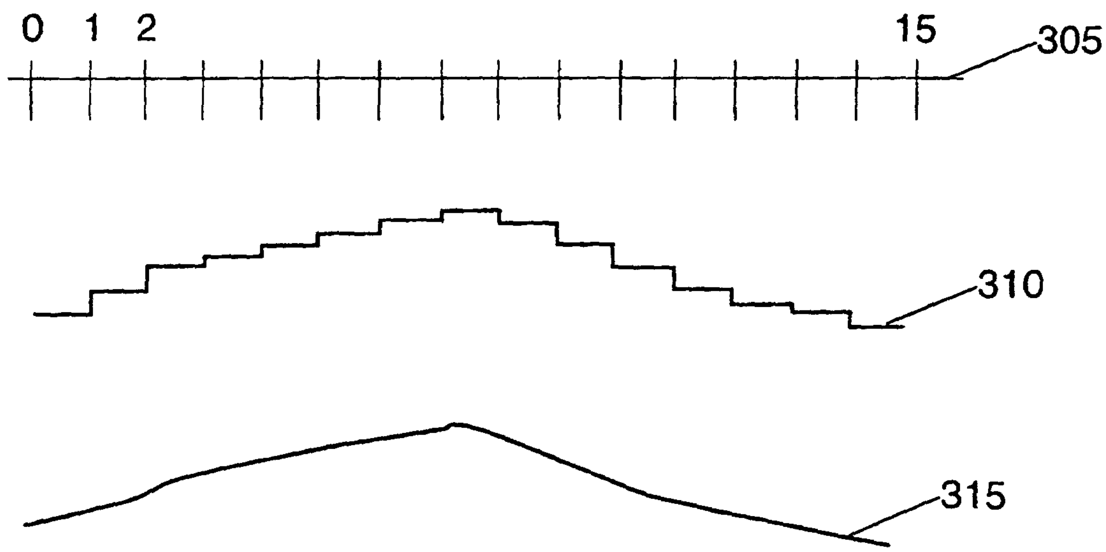


Fig.3

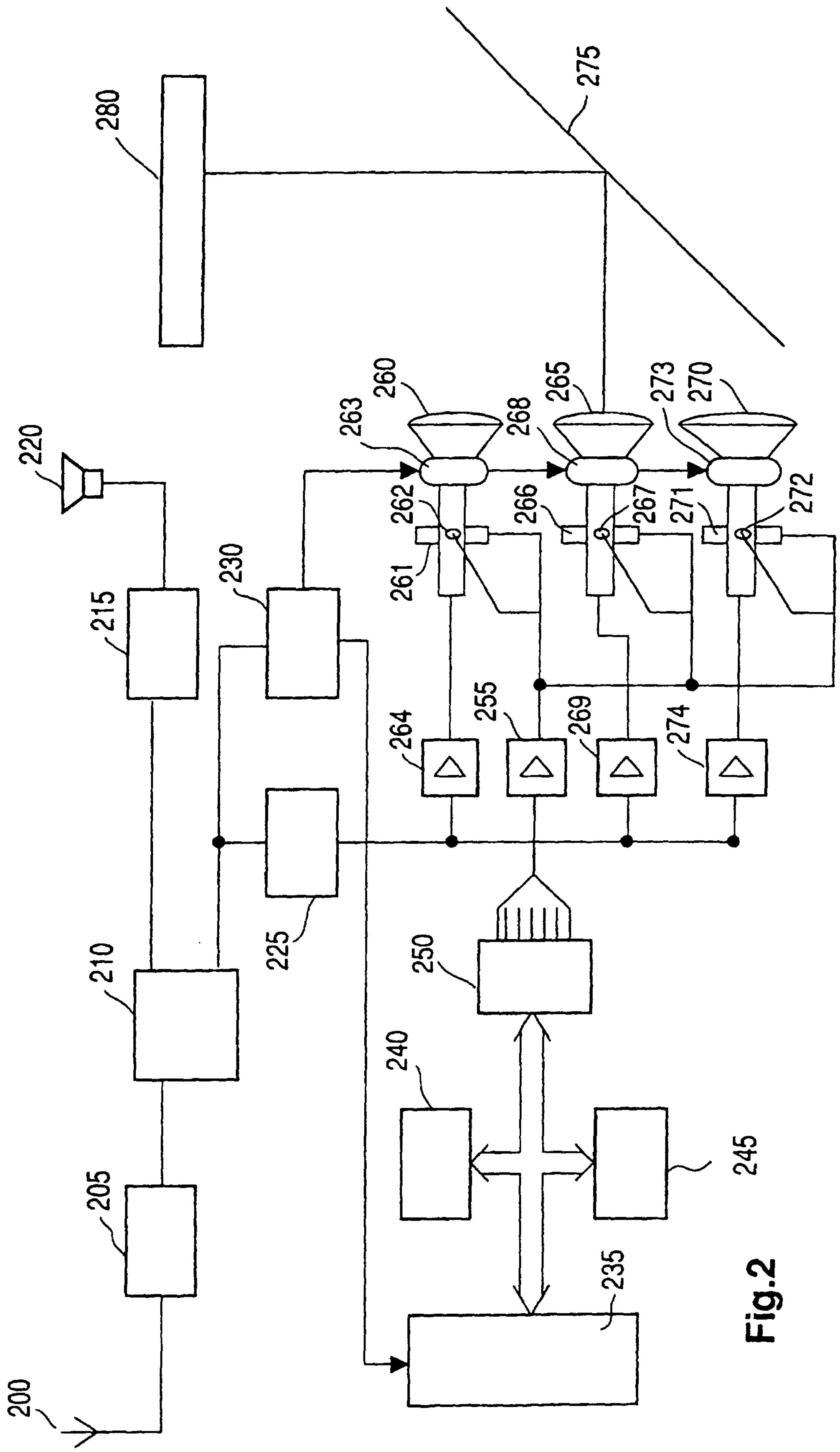
200
205
210
215
220
225
230
235
240
245
250
255
260
261
262
263
264
265
266
267
268
269
270
271
272
273
274
275
280

Fig.2

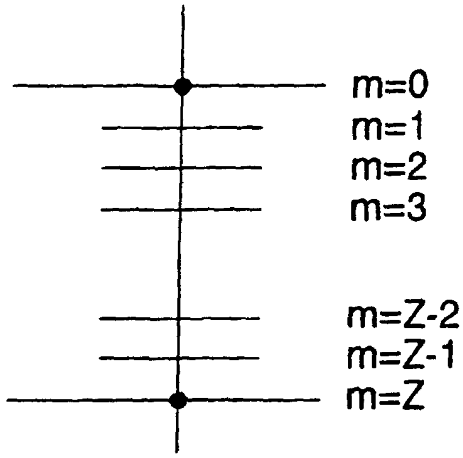
m=0
m=1
m=2
m=3
m=Z-2
m=Z-1
m=Z

Fig.4

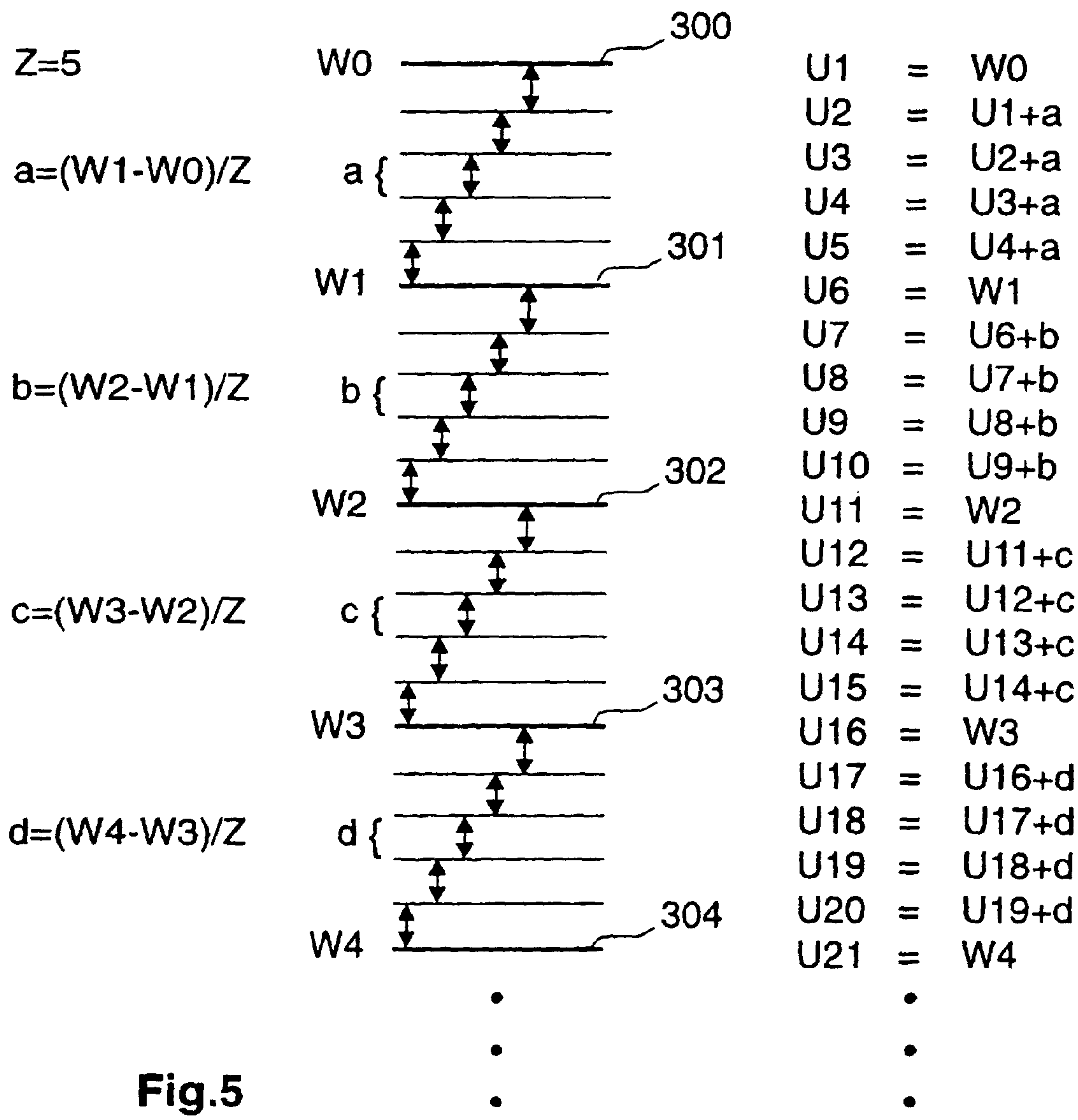
Z=5
a=(W1-W0)/Z
b=(W2-W1)/Z
c=(W3-W2)/Z
d=(W4-W3)/Z
W0
a
W1
b
W2
c
W3
d
W4
300
301
302
303
304
U1 = W0
U2 = U1+a
U3 = U2+a
U4 = U3+a
U5 = U4+a
U6 = W1
U7 = U6+b
U8 = U7+b
U9 = U8+b
U10 = U9+b
U11 = W2
U12 = U11+c
U13 = U12+c
U14 = U13+c
U15 = U14+c
U16 = W3
U17 = U16+d
U18 = U17+d
U19 = U18+d
U20 = U19+d
U21 = W4

Fig.5

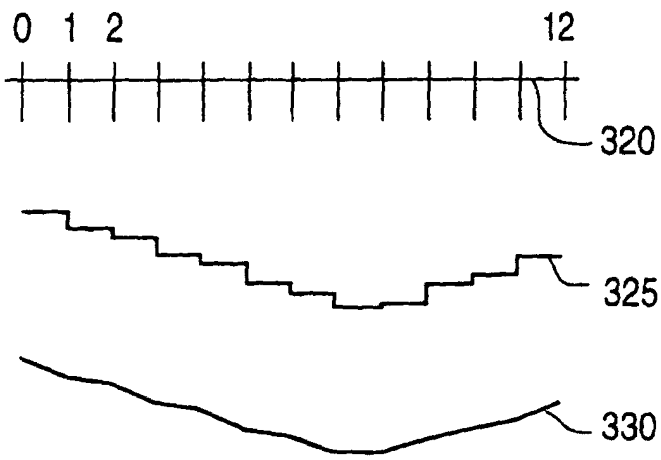


Fig.6

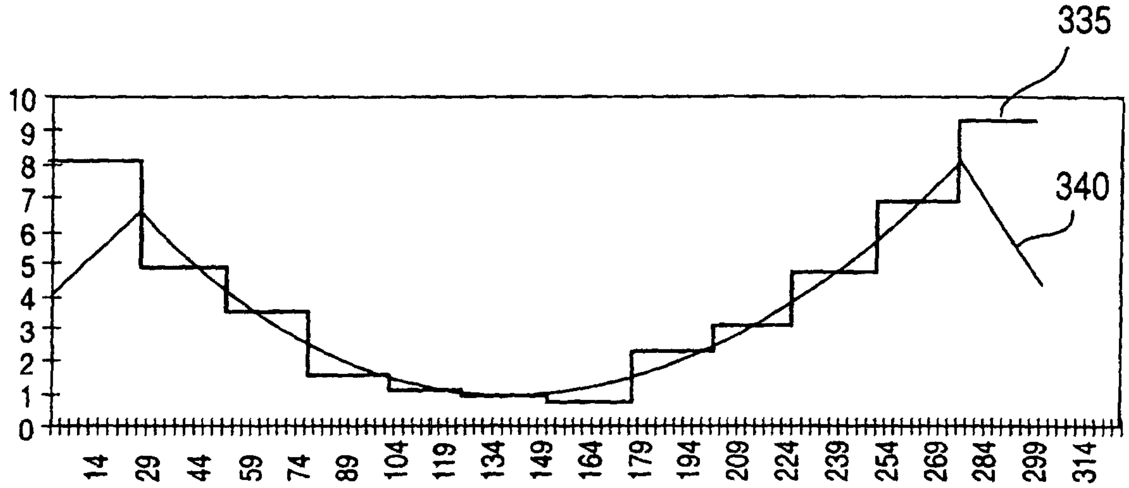


Fig.10

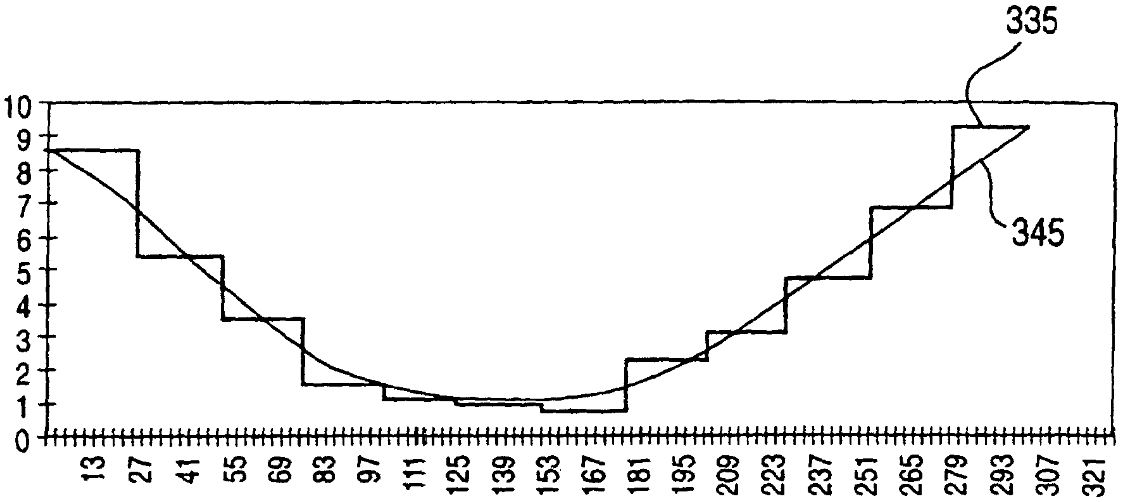


Fig.12

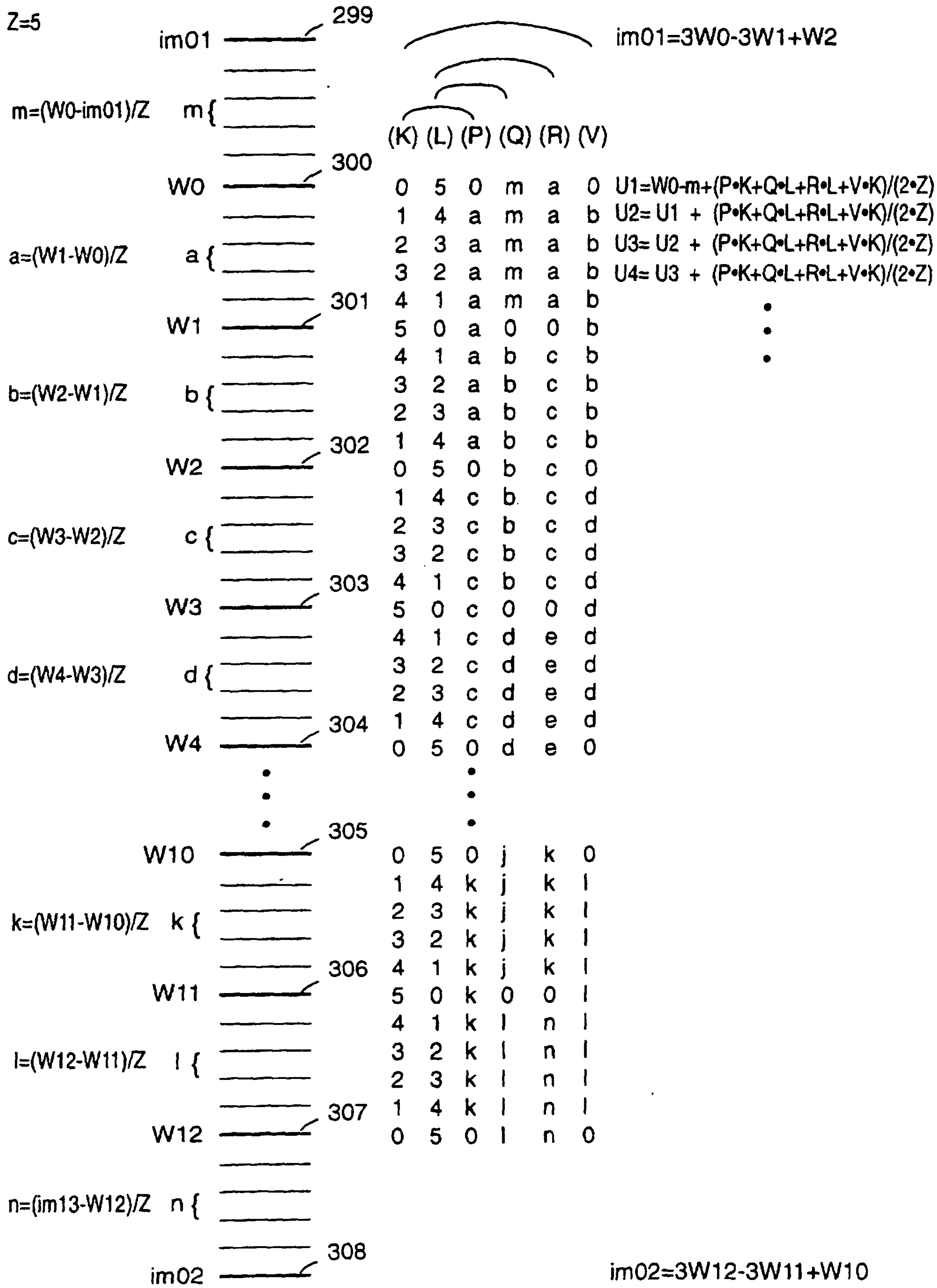
Z=5
im01
299
im01=3W0-3W1+W2
m=(W0-im01)/Z m
(K) (L) (P) (Q) (R) (V)
300
W0
0 5 0 m a 0 U1=W0-m+(P•K+Q•L+R•L+V•K)/(2•Z)
1 4 a m a b U2= U1 + (P•K+Q•L+R•L+V•K)/(2•Z)
a=(W1-W0)/Z a
2 3 a m a b U3= U2 + (P•K+Q•L+R•L+V•K)/(2•Z)
3 2 a m a b U4= U3 + (P•K+Q•L+R•L+V•K)/(2•Z)
301
4 1 a m a b
W1
5 0 a 0 0 b
4 1 a b c b
b=(W2-W1)/Z b
3 2 a b c b
2 3 a b c b
302
1 4 a b c b
W2
0 5 0 b c 0
1 4 c b c d
c=(W3-W2)/Z c
2 3 c b c d
3 2 c b c d
303
4 1 c b c d
W3
5 0 c 0 0 d
4 1 c d e d
d=(W4-W3)/Z d
3 2 c d e d
2 3 c d e d
304
1 4 c d e d
W4
0 5 0 d e 0
305
W10
0 5 0 j k 0
1 4 k j k l
k=(W11-W10)/Z k
2 3 k j k l
3 2 k j k l
306
4 1 k j k l
W11
5 0 k 0 0 l
4 1 k l n l
l=(W12-W11)/Z l
3 2 k l n l
2 3 k l n l
307
1 4 k l n l
W12
0 5 0 l n 0
n=(im13-W12)/Z n
308
im02
im02=3W12-3W11+W10

Fig.7

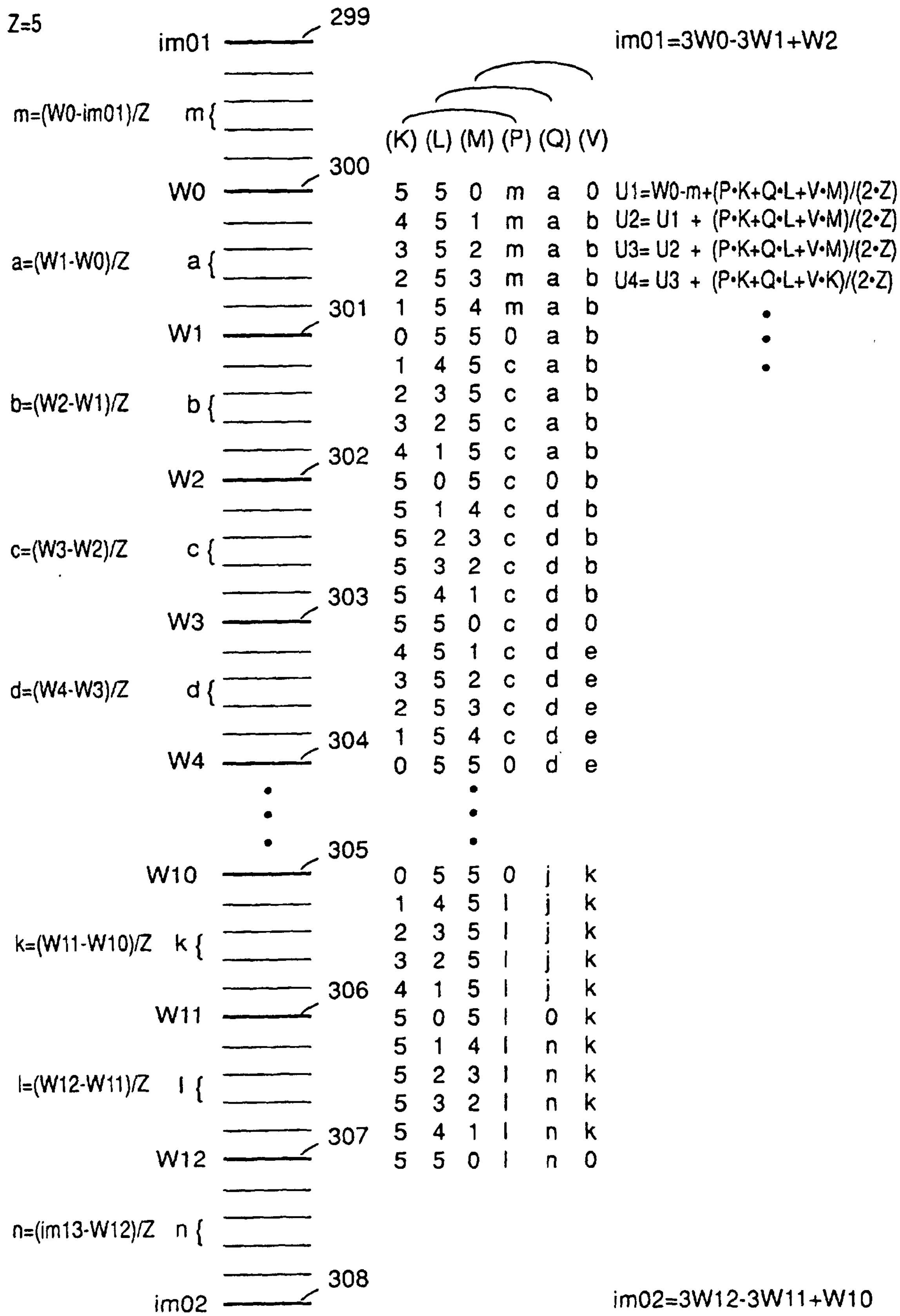
Z=5
im01
299
im01=3W0-3W1+W2
m=(W0-im01)/Z m {
(K) (L) (M) (P) (Q) (V)
300
W0
5 5 0 m a 0 U1=W0-m+(P•K+Q•L+V•M)/(2•Z)
4 5 1 m a b U2= U1 + (P•K+Q•L+V•M)/(2•Z)
a=(W1-W0)/Z a {
3 5 2 m a b U3= U2 + (P•K+Q•L+V•M)/(2•Z)
2 5 3 m a b U4= U3 + (P•K+Q•L+V•K)/(2•Z)
301
1 5 4 m a b
W1
0 5 5 0 a b
1 4 5 c a b
b=(W2-W1)/Z b {
2 3 5 c a b
3 2 5 c a b
302
4 1 5 c a b
W2
5 0 5 c 0 b
5 1 4 c d b
c=(W3-W2)/Z c {
5 2 3 c d b
5 3 2 c d b
303
5 4 1 c d b
W3
5 5 0 c d 0
4 5 1 c d e
d=(W4-W3)/Z d {
3 5 2 c d e
2 5 3 c d e
304
1 5 4 c d e
W4
0 5 5 0 d e
305
W10
0 5 5 0 j k
1 4 5 l j k
k=(W11-W10)/Z k {
2 3 5 l j k
3 2 5 l j k
306
4 1 5 l j k
W11
5 0 5 l 0 k
5 1 4 l n k
l=(W12-W11)/Z l {
5 2 3 l n k
5 3 2 l n k
307
5 4 1 l n k
W12
5 5 0 l n 0
n=(im13-W12)/Z n {
308
im02
im02=3W12-3W11+W10

Fig.8

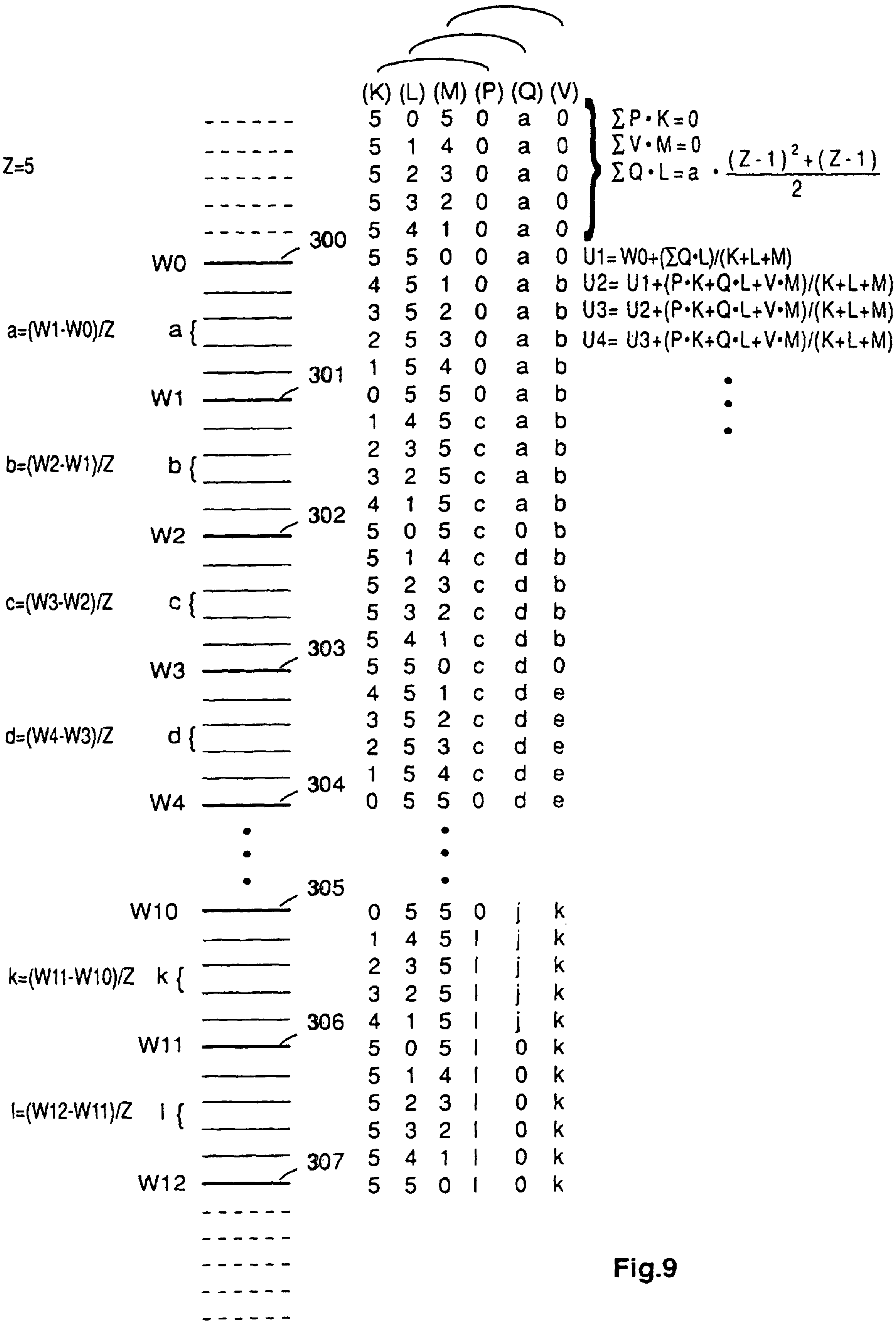


| (K) | (L) | (M) | (P) | (Q) | (V) |
|---|---|---|---|---|---|
| 5 | 0 | 5 | 0 | a | 0 |
| 5 | 1 | 4 | 0 | a | 0 |
| 5 | 2 | 3 | 0 | a | 0 |
| 5 | 3 | 2 | 0 | a | 0 |
| 5 | 4 | 1 | 0 | a | 0 |
| 5 | 5 | 0 | 0 | a | 0 |
| 4 | 5 | 1 | 0 | a | b |
| 3 | 5 | 2 | 0 | a | b |
| 2 | 5 | 3 | 0 | a | b |
| 1 | 5 | 4 | 0 | a | b |
| 0 | 5 | 5 | 0 | a | b |
| 1 | 4 | 5 | c | a | b |
| 2 | 3 | 5 | c | a | b |
| 3 | 2 | 5 | c | a | b |
| 4 | 1 | 5 | c | a | b |
| 5 | 0 | 5 | c | 0 | b |
| 5 | 1 | 4 | c | d | b |
| 5 | 2 | 3 | c | d | b |
| 5 | 3 | 2 | c | d | b |
| 5 | 4 | 1 | c | d | b |
| 5 | 5 | 0 | c | d | 0 |
| 4 | 5 | 1 | c | d | e |
| 3 | 5 | 2 | c | d | e |
| 2 | 5 | 3 | c | d | e |
| 1 | 5 | 4 | c | d | e |
| 0 | 5 | 5 | 0 | d | e |
| • | | • | | | |
| 0 | 5 | 5 | 0 | j | k |
| 1 | 4 | 5 | l | j | k |
| 2 | 3 | 5 | l | j | k |
| 3 | 2 | 5 | l | j | k |
| 4 | 1 | 5 | l | j | k |
| 5 | 0 | 5 | l | 0 | k |
| 5 | 1 | 4 | l | 0 | k |
| 5 | 2 | 3 | l | 0 | k |
| 5 | 3 | 2 | l | 0 | k |
| 5 | 4 | 1 | l | 0 | k |
| 5 | 5 | 0 | l | 0 | k |

Fig.9

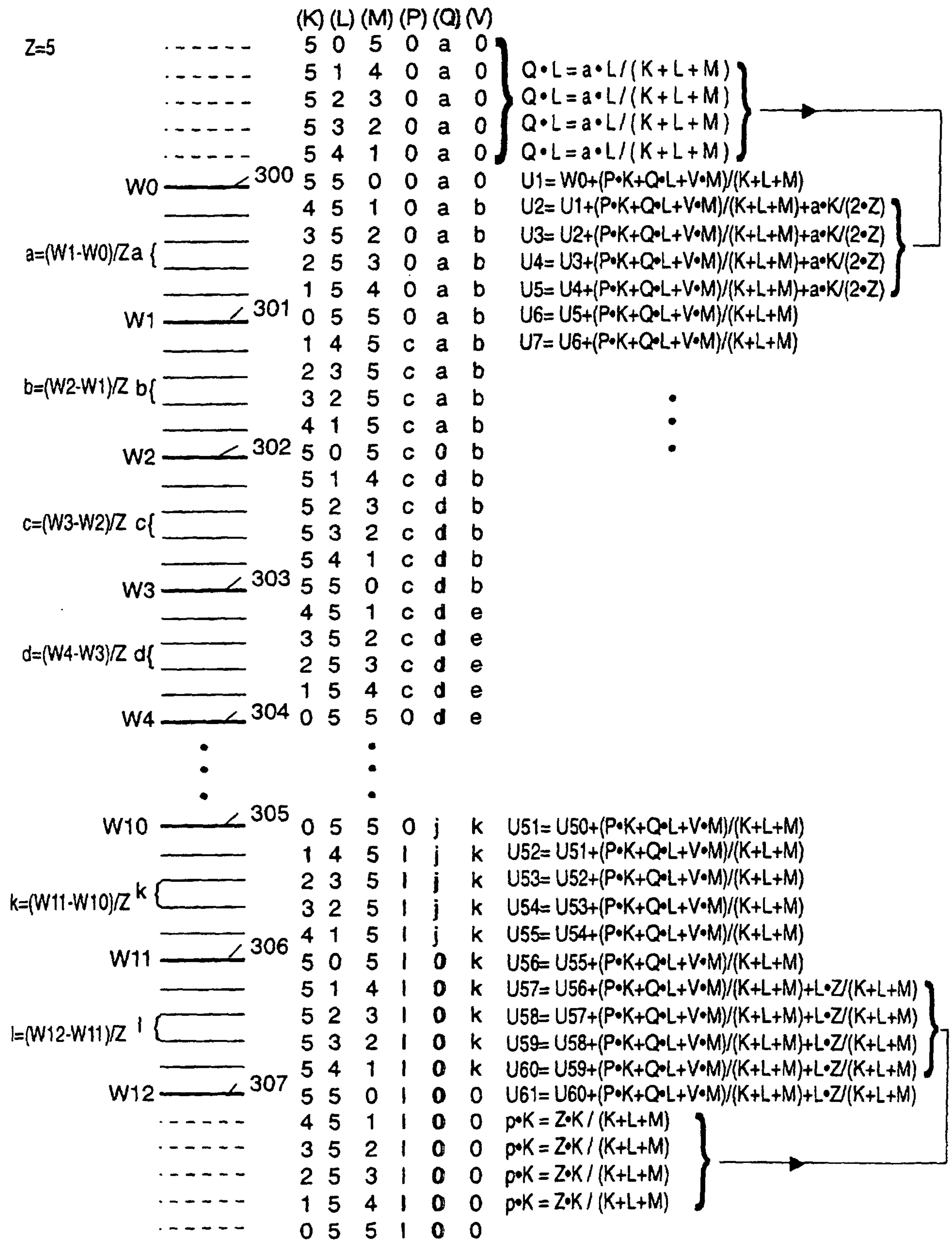
(K) (L) (M) (P) (Q) (V)
Z=5
5 0 5 0 a 0
5 1 4 0 a 0 Q•L=a•L/(K+L+M)
5 2 3 0 a 0 Q•L=a•L/(K+L+M)
5 3 2 0 a 0 Q•L=a•L/(K+L+M)
5 4 1 0 a 0 Q•L=a•L/(K+L+M)
W0 300 5 5 0 0 a 0 U1= W0+(P•K+Q•L+V•M)/(K+L+M)
4 5 1 0 a b U2= U1+(P•K+Q•L+V•M)/(K+L+M)+a•K/(2•Z)
a=(W1-W0)/Z a
3 5 2 0 a b U3= U2+(P•K+Q•L+V•M)/(K+L+M)+a•K/(2•Z)
2 5 3 0 a b U4= U3+(P•K+Q•L+V•M)/(K+L+M)+a•K/(2•Z)
1 5 4 0 a b U5= U4+(P•K+Q•L+V•M)/(K+L+M)+a•K/(2•Z)
W1 301 0 5 5 0 a b U6= U5+(P•K+Q•L+V•M)/(K+L+M)
1 4 5 c a b U7= U6+(P•K+Q•L+V•M)/(K+L+M)
b=(W2-W1)/Z b
2 3 5 c a b
3 2 5 c a b
4 1 5 c a b
W2 302 5 0 5 c 0 b
5 1 4 c d b
c=(W3-W2)/Z c
5 2 3 c d b
5 3 2 c d b
5 4 1 c d b
W3 303 5 5 0 c d b
4 5 1 c d e
d=(W4-W3)/Z d
3 5 2 c d e
2 5 3 c d e
1 5 4 c d e
W4 304 0 5 5 0 d e
W10 305 0 5 5 0 j k U51= U50+(P•K+Q•L+V•M)/(K+L+M)
1 4 5 l j k U52= U51+(P•K+Q•L+V•M)/(K+L+M)
k=(W11-W10)/Z k
2 3 5 l j k U53= U52+(P•K+Q•L+V•M)/(K+L+M)
3 2 5 l j k U54= U53+(P•K+Q•L+V•M)/(K+L+M)
4 1 5 l j k U55= U54+(P•K+Q•L+V•M)/(K+L+M)
W11 306 5 0 5 l 0 k U56= U55+(P•K+Q•L+V•M)/(K+L+M)
5 1 4 l 0 k U57= U56+(P•K+Q•L+V•M)/(K+L+M)+L•Z/(K+L+M)
l=(W12-W11)/Z l
5 2 3 l 0 k U58= U57+(P•K+Q•L+V•M)/(K+L+M)+L•Z/(K+L+M)
5 3 2 l 0 k U59= U58+(P•K+Q•L+V•M)/(K+L+M)+L•Z/(K+L+M)
5 4 1 l 0 k U60= U59+(P•K+Q•L+V•M)/(K+L+M)+L•Z/(K+L+M)
W12 307 5 5 0 l 0 0 U61= U60+(P•K+Q•L+V•M)/(K+L+M)+L•Z/(K+L+M)
4 5 1 l 0 0 p•K = Z•K / (K+L+M)
3 5 2 l 0 0 p•K = Z•K / (K+L+M)
2 5 3 l 0 0 p•K = Z•K / (K+L+M)
1 5 4 l 0 0 p•K = Z•K / (K+L+M)
0 5 5 l 0 0

Fig.11

Z=5

$$\alpha = (Z^2+Z)/2$$

$$\beta = ((Z-1)^2+(Z-1))/2$$

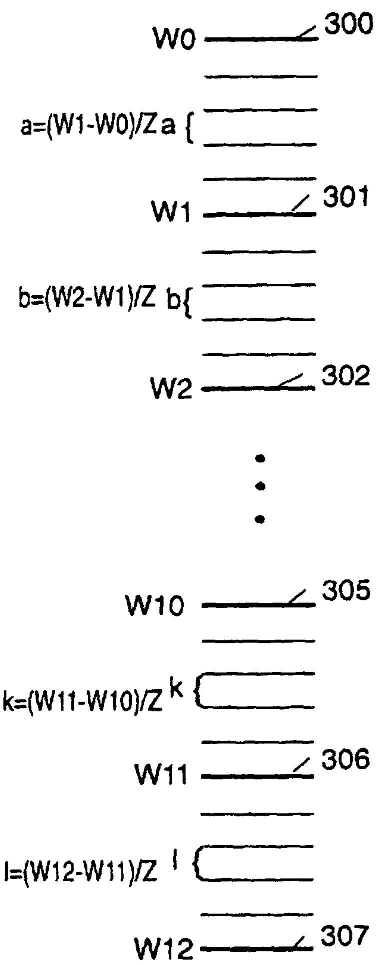


| (W) | (K) | (L) | (M) | (P) | (Q) | (V) | |
|---|---|---|---|---|---|---|---|
| W0 | 0 | 0 | 0 | 0 | a | b | U1= W+(K+1)/2•Q+(M•Q+L•V)/(2•Z) |
| W0 | 1 | 1 | 4 | 0 | a | b | U2= W+(K+1)/2•Q+(M•Q+L•V)/(2•Z) |
| W0 | 2 | 3 | 7 | 0 | a | b | U3= W+(K+1)/2•Q+(M•Q+L•V)/(2•Z) |
| W0 | 3 | 6 | 9 | 0 | a | b | U4= W+(K+1)/2•Q+(M•Q+L•V)/(2•Z) |
| W0 | 4 | 10 | 10 | 0 | a | b | U5= W+(K+1)/2•Q+(M•Q+L•V)/(2•Z) |
| W1 | 0 | 0 | 0 | a | b | c | U6= W+(-β+M)•P+((α+Z•K)•Q+L•V)/(2•Z) |
| W1 | 1 | 1 | 4 | a | b | c | U7= W+(-β+M)•P+((α+Z•K)•Q+L•V)/(2•Z) |
| W1 | 2 | 3 | 7 | a | b | c | U8= W+(-β+M)•P+((α+Z•K)•Q+L•V)/(2•Z) |
| W1 | 3 | 6 | 9 | a | b | c | U9= W+(-β+M)•P+((α+Z•K)•Q+L•V)/(2•Z) |
| W1 | 4 | 10 | 10 | a | b | c | U10= W+(-β+M)•P+((α+Z•K)•Q+L•V)/(2•Z) |
| W2 | 0 | 0 | 0 | b | c | d | U11= W+(-β+M)•P+((α+Z•K)•Q+L•V)/(2•Z) |
| ⋮ | | | ⋮ | | | | ⋮ |
| W10 | 0 | 0 | 0 | j | k | l | U51= W+((-β+M)•P+((α+Z•K)•Q+L•Q)/(2•Z) |
| W10 | 1 | 1 | 4 | j | k | l | U52= W+((-β+M)•P+((α+Z•K)•Q+L•Q)/(2•Z) |
| W10 | 2 | 3 | 7 | j | k | l | U53= W+((-β+M)•P+((α+Z•K)•Q+L•Q)/(2•Z) |
| W10 | 3 | 6 | 9 | j | k | l | U54= W+((-β+M)•P+((α+Z•K)•Q+L•Q)/(2•Z) |
| W10 | 4 | 10 | 10 | j | k | l | U55= W+((-β+M)•P+((α+Z•K)•Q+L•Q)/(2•Z) |
| W11 | 0 | 0 | 0 | k | l | 0 | U56= W+((-β+M)•P+(α+Z•K+L)•Q)/(2•Z) |
| W11 | 1 | 1 | 4 | k | l | 0 | U57= W+((-β+M)•P+(α+Z•K+L)•Q)/(2•Z) |
| W11 | 2 | 3 | 7 | k | l | 0 | U58= W+((-β+M)•P+(α+Z•K+L)•Q)/(2•Z) |
| W11 | 3 | 6 | 9 | k | l | 0 | U59= W+((-β+M)•P+(α+Z•K+L)•Q)/(2•Z) |
| W11 | 4 | 10 | 10 | k | l | 0 | U60= W+((-β+M)•P+(α+Z•K+L)•Q)/(2•Z) |
| W12 | 0 | 0 | 0 | l | 0 | 0 | U61= W+((-β+α)•P+α•P)/2•Z |

**Fig.13**